# FASCICULE DE BREVET EUROPEEN

(11) **EP 0 526 336 B1**
(45) Date de publication et mention de la délivrance du brevet: **28.02.1996**
(21) Numéro de dépôt: 92402192.6
(22) Date de dépôt: 30.07.1992
(51) Int. Cl.: F21Q 1/00, B60Q 1/56

(54) **Dispositif d'éclairage de plaque d'immatriculation pour véhicule automobile et procédé de fabrication d'un globe pour un tel dispositif d'éclairage**
Vorrichtung zur Ausleuchtung des Kennzeichenschilds eines Kraftfahrzeugs und Verfahren zur Herstellung eines Deckglases für eine solche Vorrichtung
Vehicle number plate illuminating device, and process for making a cover glass for such an illuminating device

(30) Priorité: 02.08.1991 FR 9109868
(43) Date de publication de la demande: 03.02.1993
(73) Titulaire: VALEO VISION, F-93012 Bobigny Cédex (FR)
(72) Inventeur: Durand, Dominique, F-03400 Yzeure (FR); Gasquet, Jean-Claude, F-89100 Saint-Clement (FR)
(74) Mandataire: Martin, Jean-Jacques

(56) Documents cités:
- DE-B- 1 099 408
- FR-A- 875 646
- US-A- 4 862 330

## Description

La présente invention concerne les dispositifs d'éclairage de plaque d'immatriculation pour véhicules automobiles. Elle concerne plus précisément un tel dispositif d'éclairage de type économique, c'est-à-dire comportant une source lumineuse unique.

Un problème majeur dans la conception d'un tel dispositif réside en ce que, à partir de la source lumineuse unique et de son globe, de petites dimensions, il faut éclairer la plaque d'immatriculation, de dimensions comparativement grandes, avec la plus grande uniformité possible. Cette difficulté est accentuée par le fait que, pour des raisons d'encombrement du véhicule en direction longitudinale, le dispositif d'éclairage doit être situé à proximité du plan (essentiellement vertical) contenant la plaque, et donc procurer un éclairage pratiquement rasant.

classiquement, un tel dispositif d'éclairage comprend des moyens réfracteurs appropriés sur le globe, et par exemple un ensemble de pavés élémentaires formant chacun un prisme de manière à répartir la lumière reçue directement de la lampe de manière à couvrir toutes les régions de la plaque.

Le document DE-A-39 07 372 enseigne un dispositif d'éclairage de ce type.

Un inconvénient de ce type de dispositif connu réside en ce que, notamment du fait d'une taille minimale limite des pavés individuels, imposée par les techniques de moulage de matière plastique utilisées pour réaliser le globe, il s'avère extrêmement difficile dans la pratique d'aboutir à un éclairage de plaque d'uniformité satisfaisante.

La présente invention vise à pallier cet inconvénient de la technique antérieure à l'aide d'un dispositif d'éclairage qui soit tout aussi simple et économique à réaliser que dans la technique antérieure.

Elle concerne à cet effet un dispositif d'éclairage pour plaque d'immatriculation tel que défini dans la revendication 1.

L'invention concerne également un procédé de fabrication d'un globe pour un dispositif d'éclairage tel que défini ci-dessus, le procédé étant défini dans la revendication 4.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est une vue en coupe dans un plan vertical transversal au véhicule d'un dispositif d'éclairage de plaque selon l'invention,
la figure 2 est une vue de dessus du dispositif d'éclairage de la figure 1,
la figure 3 est une vue en coupe du dispositif d'éclairage dans le plan vertical longitudinal médian du véhicule,
la figure 4 est une vue de détail d'une partie de la structure d'un globe du dispositif d'éclairage de l'invention,
la figure 5 est une vue détaillée en plan de dessus du globe du dispositif d'éclairage selon l'invention,
la figure 6 est une vue détaillée du globe, de profil selon la flèche VI de la figure 5,
la figure 7 est une demi-vue en élévation illustrant, par un ensemble de rayons lumineux projetés, la répartition de la lumière sur une plaque d'immatriculation obtenue avec un dispositif d'éclairage selon la technique antérieure, et
la figure 8 illustre de façon analogue la répartition de la lumière avec un dispositif d'éclairage selon la présente invention.

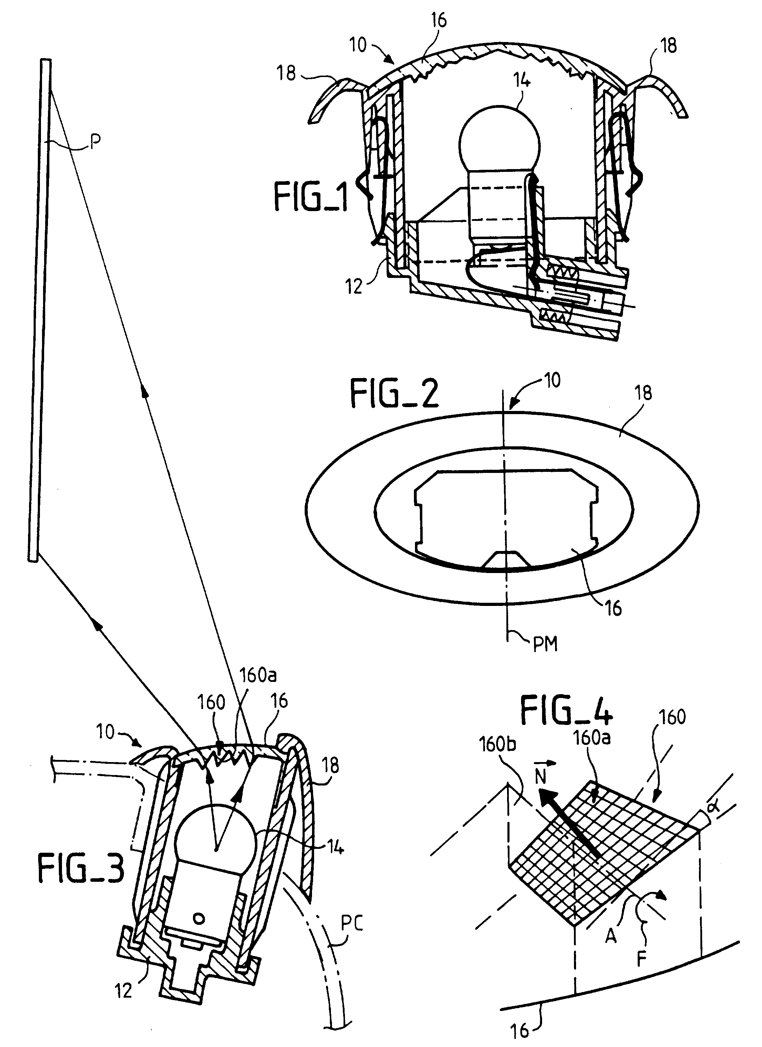

En référence tout d'abord aux figures 1 à 3, on a représenté un dispositif d'éclairage qui est encastré dans la surface supérieure d'un pare-chocs arrières PC d'un véhicule automobile. La plaque d'immatriculation est désignée par la référence P.

Le dispositif d'éclairage 10 comprend un boîtier 12, une lampe à filament 14, un globe 16 et un enjoliveur périphérique 18 destiné à assurer la transition continue entre le globe 16 et la surface supérieure du pare-chocs PC.

Le globe 16 présente une forme bombée vers l'extérieur et comporte, de préférence à sa surface interne, un ensemble de pavés déviateurs individuels 160 destinés chacun à affecter au rayonnement lumineux issu de la lampe 14 une déviation bien déterminée, de façon à ce que le rayonnement dévié couvre aussi uniformément que possible l'ensemble de la surface de la plaque P, et soit autant que possible limité à cette surface.

Conformément à un aspect essentiel de la présente invention, au moins certains pavés 160 sont non pas des pavés prismatiques conventionnels, c'est-à-dire dont la surface intérieure inclinée est plane, mais sont des pavés pseudo-prismatiques dont la surface est courbe, en présentant un certain degré de torsion.

Ainsi l'on a représenté sur la figure 4 une vue en perspective, à partir du dessous du globe, d'un pavé élémentaire 160 qui comporte une surface active 160a et des surfaces de dépouille telles que 160b.

Pour mieux illustrer la forme de la surface active 160a, celle-ci a été quadrillée. Si la surface 160a était plane, le quadrillage serait un quadrillage orthogonal avec deux ensemble de lignes, les lignes d'un même ensemble étant parallèles entre elles et les lignes des deux ensembles étant perpendiculaires entre elles.

On observe sur la figure 4 que la surface 160a est le résultat d'une surface plane qui a subi une torsion autour d'un axe essentiellement contenu dans le plan de ladite surface, c'est-à-dire que l'inclinaison des lignes droites de chaque ensemble, par rapport à un plan de référence constitué par exemple par le plan tangent à la surface extérieure du globe (surface inférieure sur la figure 4) varie progressivement d'un bord de la surface active au bord opposé.

En choisissant l'axe autour duquel est effectuée la torsion et l'importance ou angle de cette torsion, on détermine l'intervalle angulaire dans lequel va s'effectuer la dispersion du rayonnement incident.

Plus précisément, la conception de chaque pavé déviateur individuel peut s'effectuer :
(a) en déterminant tout d'abord un pseudo-vecteur normal N de la surface active 160a, qui va lui-même déterminer une direction moyenne de déviation du rayonnement reçu de la lampe 14, et donc une région de la plaque P couverte par le rayonnement dévié, et
(b) en déterminant ensuite l'axe A et l'importance (angle α) de la torsion de la surface 160a, qui va déterminer l'étalement, en privilégiant une direction ou une autre, de la lumière sur la plaque par rapport à la région qui serait couverte par la lumière si la surface 160a était plane.

On fabrique ensuite, de préférence par des moyens de fabrication assistés par ordinateur, un outil de moulage en fonction des valeurs obtenues pour chaque pavé par les étapes ci-dessus, en vue de fabriquer le globe en grande série.

On observe ici que, du fait des déviations relativement importantes demandées, qui s'expliquent par le fait que le dispositif d'éclairage est relativement proche de la plaque d'immatriculation et que cette dernière présente des dimensions comparativement grandes, les surfaces actives 160a d'au moins certains pavés 160 présentent une forte inclinaison par rapport au plan de référence associé, tel que défini plus haut. Et la forme bombée du globe 16 permet de minimiser ces inclinaisons et de diminuer les surfaces de dépouilles, correspondant à de la lumière perdue, situées entre deux pavés voisins.

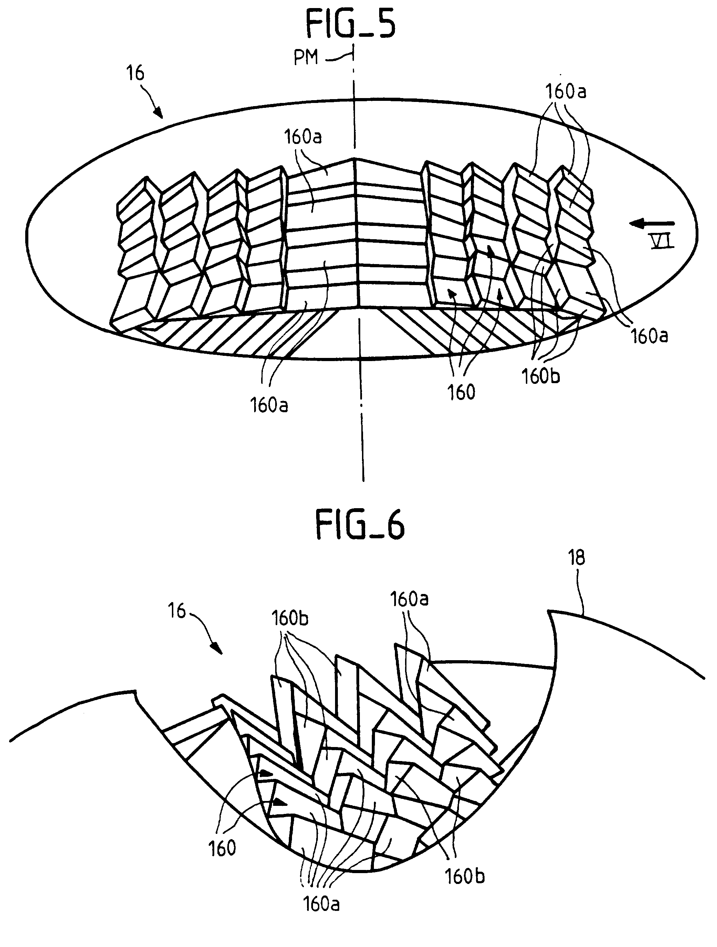

Les figures 5 et 6 illustrent une répartition préférée des divers pavés 160 sur le globe 16. Les dimensions et formes représentées sur ces figures sont à considérer comme incluses dans la présente description.

On observe sur ces figures que les surfaces actives des pavés 160 situés dans la région centrale du globe, relativement faiblement inclinées par rapport à leur plan de référence, servent à l'éclairement de la région centrale de la plaque. Et à mesure que l'on s'éloigne latéralement du plan vertical médian PM du globe, les surfaces actives 160a prennent une inclinaison de plus en plus importante, de manière à atteindre les régions latérales de la plaque.

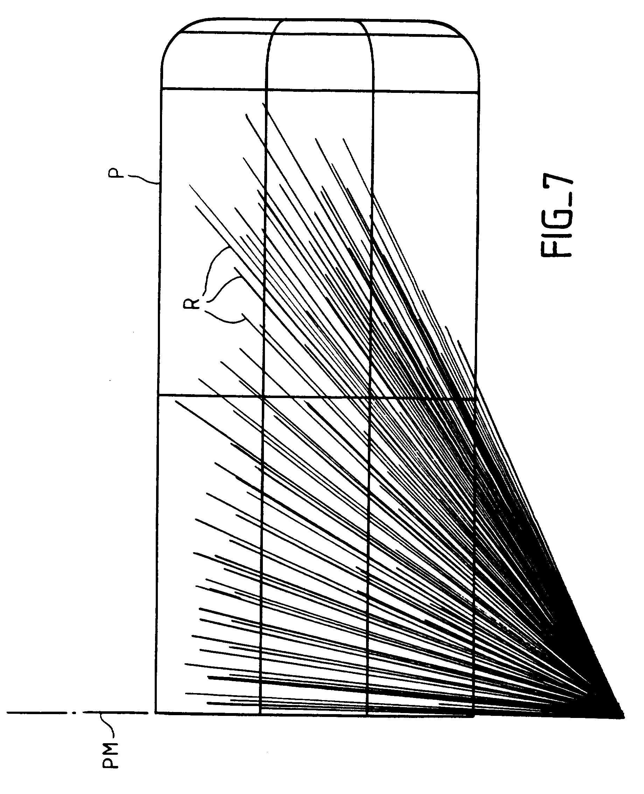

Sur la figure 7, on a tracé, en projection dans un plan essentiellement vertical contenant la plaque d'immatriculation P, un ensemble de rayons lumineux R déviés par un globe de conception conventionnelle. La projection de chaque rayon est représentée par un segment de droite partant du globe connu et se terminant à son point d'impact sur la plaque P. Les rayons tracés correspondent, à des rayons régulièrement répartis angulairement à partir du filament de la lampe.

On observe que la région latérale extrême de cette plaque est mal couverte par le rayonnement. Plus précisément, environ le tiers extérieur (en direction latérale) de la plaque reçoit une quantité de rayonnement sensiblement inférieure à la quantité reçue par les deux tiers, côté intérieur, de ladite plaque.

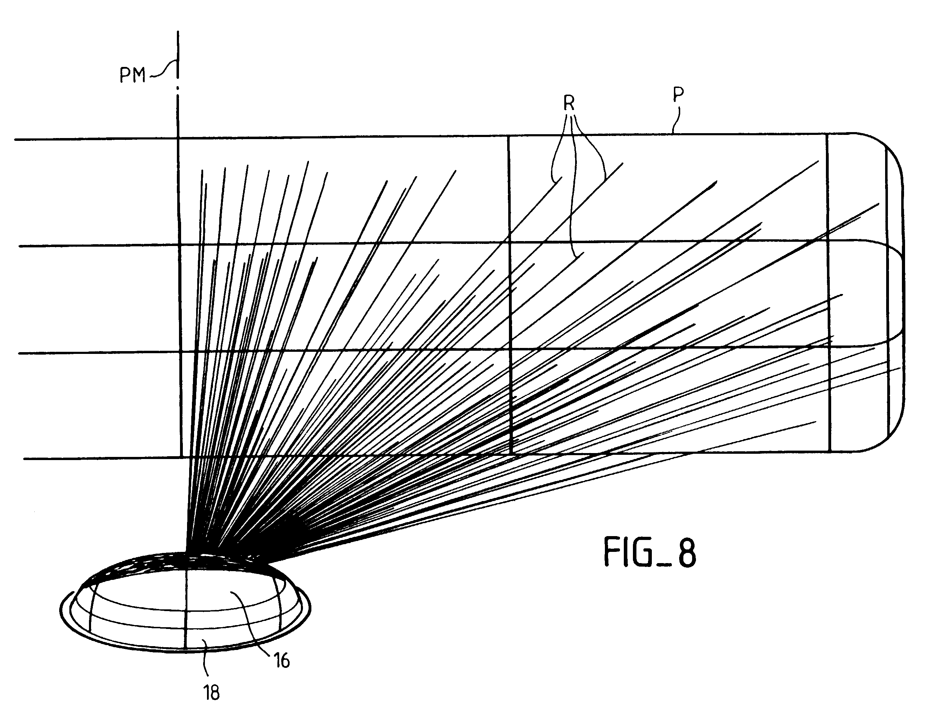

La figure 8 représente de la même manière que sur la figure 7, l'éclairement de la plaque avec un globe 16 conçu conformément à la présente invention. On peut constater un éclairement extrêmement homogène de la plaque, En particulier, l'ensemble des régions de bord de la plaque, et tout particulièrement sa région extérieure, reçoit une quantité de lumière tout à fait comparable à celle reçue par sa région centrale.

Bien entendu, la présente invention n'est nullement limitée à la forme de réalisation décrite ci-dessus et représentée sur les dessins, mais l'homme de l'art saura y apporter toute variante ou modification conforme à son esprit.

En particulier, l'homme de l'art, à l'aide de moyens appropriés de conception assistée par ordinateur, saura réaliser la répartition de pavés déviateurs et la configuration de chaque pavé individuel de façon appropriée à chaque géométrie particulière quant à la position et l'orientation de la plaque et du dispositif d'éclairage. On notera à cet égard que, bien que dans la présente invention toutes les surfaces actives 160a du globe présentent une certaine torsion, on peut réaliser des globes selon l'invention avec certains pavés dont la surface active présente une telle torsion (pavés pseudo-prismatiques ), et d'autres pavés dont la surface 160a est plane (pavés prismatiques).

## Revendications

1. Dispositif d'éclairage pour plaque d'immatriculation de véhicule automobile, du type comportant une source lumineuse (14) et un globe (16), le globe comprenant une pluralité de pavés déviateurs individuels (160) capables de dévier le rayonnement lumineux issu de la source pour le répartir sur la surface de ladite plaque d'immatriculation (P),
ladite plaque d'immatriculation (P) étant faiblement inclinée par rapport à une direction générale d'émission de la lumière par le dispositif d'éclairage, caractérisé en ce qu'au moins certains pavés déviateurs (160) sont des pavés pseudo-prismatiques, dont une surface active (160a) résulte de la torsion d'une surface plané autour d'un axe (A) situé au voisinage du plan de cette surface.

2. Dispositif d'éclairage selon la revendication 1, caractérisé en ce que le globe (16) est de forme bombée.

3. Dispositif d'éclairage selon l'une des revendications 1 et 2, caractérisé en ce que chaque pavé déviateur (160) est un pavé pseudo-prismatique.

4. Procédé de fabrication d'un globe pour un dispositif d'éclairage selon l'une des revendications précédentes, caractérisé en ce que, pour chaque pavé déviateur (160) parmi au moins un groupe de pavés déviateurs individuels:
(a) on détermine l'orientation (N) d'une surface plane en fonction de la région de la plaque d'immatriculation à faire éclairer par ce pavé déviateur,
(b) on détermine un axe (A) et un angle (α) de torsion de cette surface plane en fonction d'un étalement souhaité de la lumière dans ladite région de la plaque d'immatriculation,
(c) on fabrique un outil de moulage du globe en fonction des résultats des étapes (a) et (b), et
(d) on moule le globe à l'aide dudit outil de moulage.

## Patentansprüche

1. Vorrichtung zur Ausleuchtung des Kennzeichenschilds eines Kraftfahrzeugs, der Bauart mit einer Lichtquelle (14) und mit einem Deckglas (16), wobei das Deckglas eine Vielzahl von einzelnen Ablenkelementen (160) umfaßt, die dazu geeignet sind, die Lichtstrahlung, die aus der Quelle stammt, abzulenken, um sie auf der Oberfläche des Kennzeichenschilds (P) zu verteilen, wobei das Kennzeichenschild (P) in bezug zu einer allgemeinen Strahlungsrichtung des Lichts, das aus der Vorrichtung zur Ausleuchtung stammt, leicht geneigt ist,
**dadurch gekennzeichnet**, daß wenigstens einige Ablenkelemente (160) pseudo-prismatische Elemente sind, von denen eine aktive Oberfläche (160a) aus der Torsion einer ebenen Fläche um eine Achse (A), die sich in Nachbarschaft der Ebene dieser Oberfläche befindet, entstanden ist.

2. Vorrichtung zur Ausleuchtung nach Anspruch 1,
**dadurch gekennzeichnet**, daß das Deckglas (16) eine gewölbte Form aufweist.

3. Vorrichtung zur Ausleuchtung nach einem der Ansprüche 1 und 2, **dadurch gekennzeichnet**, daß jedes Ablenkelement (160) ein pseudo-prismatisches Element ist.

4. Verfahren zur Herstellung eines Deckglases für eine Vorrichtung zur Ausleuchtung nach einem der vorhergehenden Ansprüche, **dadurch gekennzeichnet**, daß für jedes Ablenkelement (160) in wenigstens einer Gruppe von einzelnen Ablenkelementen
a) die Orientierung (N) einer ebenen Fläche in Abhängigkeit vom Bereich des von diesem Ablenkelement auszuleuchtenden Kennzeichenschilds bestimmt wird,
b) eine Torsionsachse (A) und ein Torsionswinkel (α) dieser ebenen Oberfläche in Abhängigkeit einer gewünschten Verteilung des Lichts in dem Bereich des Kennzeichenschilds bestimmt wird,
c) ein Gießwerkzeug für das Deckglas in Abhängigkeit von den Ergebnissen der Schritte (a) und (b) hergestellt wird und
d) das Deckglas mit Hilfe des Gießwerkzeuges geformt wird.

## Claims

1. A device for illuminating a motor vehicle number plate, the device being of the type comprising a light source (14) and a cover glass (16), the glass having a plurality of individual deflecting blocks (160) capable of deflecting light rays from the source to distribute them over the surface of said number plate (P), said number plate (P) being inclined at a small angle relative to a general direction of light emission from the illuminating device, characterized in that at least some of the deflecting blocks (160) are pseudo-prismatic blocks, each having an active surface (160a) that is the result of twisting a plane surface about an axis (A) situated in the vicinity of the plane of said surface.

2. An illuminating device according to claim 1, characterized in that the glass (16) is of bulging shape.

3. An illuminating device according to claim 1 or 2, characterized in that all of the deflecting blocks (160) are pseudo-prismatic blocks.

4. A method of manufacturing a glass for an illuminating device according to any preceding claim, characterized in that for each deflecting block (160) in at least one group of individual deflecting blocks:
a) the orientation (N) of a plane surface is determined as a function of the region of the number plate to be illuminated by the deflecting block;
b) a twisting axis (A) and a twisting angle (α) for said plane surface are determined as a function of the spread desired for light in the said region of the number plate;
c) a tool for molding the glass is manufactured as a function of the results of steps a) and b); and
d) the glass is molded using said molding tool.
